# EUROPEAN PATENT APPLICATION

(11) **EP 1 909 283 A1**
(43) Date of publication of application: **09.04.2008**
(21) Application number: 06121679.2
(22) Date of filing: 03.10.2006
(51) Int. Cl.: G11B 27/034, H04N 5/76

(54) **Methods and devices for receiving and transmitting program data**

(71) Applicant: Koninklijke Philips Electronics N.V., 5621 BA Eindhoven (NL)
(72) Inventor: The designation of the inventor has not yet been filed
(74) Representative: Bosma, Rudolphus Hubertus Antonius

(57) **Abstract**

The method of receiving program data comprises the steps of receiving program data, determining whether the program data would fit into a certain memory when stored according to a first policy and selecting a second policy for storing program data if the program data would not fit into the certain memory when stored according to the first policy, a certain field of information of at least part of the received program data being stored according the first policy, but not according to the second policy. The method of transmitting program data comprises the steps of determining a first value, the first value being useful for determining a first size of at least part of the program data when stored according to a first policy, determining a second value, the second value being useful for determining a second size of at least part of the program data when stored according to a second policy, but not useful for determining the first size, and transmitting the first value and the second value along with the program data. The device (31) for receiving program data comprises electronic circuitry (33) operative to perform the method of receiving program data. The device (31) for transmitting program data comprises electronic circuitry (33) operative to perform the method of transmitting program data. The computer program products enable programmable devices to perform the method of receiving program data and the method of transmitting program data.

## Description

### FIELD OF THE INVENTION

The invention relates to a method of receiving program data.

The invention further relates to a method of transmitting program data.

The invention also relates to a device for receiving program data, the device comprising electronic circuitry.

The invention further relates to a device for transmitting program data, the device comprising electronic circuitry.

The invention also relates to computer program products enabling a programmable device to perform a method of receiving program data and transmitting program data, respectively.

### BACKGROUND OF THE INVENTION

An example of a method of receiving program data is disclosed in EP 0880855. The method disclosed in EP0880855 manages the memory of an electronic program guide (EPG) by deleting less important unexpired program listings as soon as the memory is full. Although this ensures that the maximum capacity of the EPG memory can always be used, the removal of previously available program data can be confusing and annoying to users.

### SUMMARY OF THE INVENTION

It is a first object of the invention to provide a method of receiving program data, which helps avoid removal of previously available program data.

It is a second object of the invention to provide a method of transmitting program data, which helps avoid removal of previously available program data.

It is a third object of the invention to provide a device for receiving program data, which helps avoid removal of previously available program data.

It is a fourth object of the invention to provide a device for transmitting program data, which helps avoid removal of previously available program data.

According to the invention, the first object is realized in that the method of receiving program data comprises the steps of receiving program data, determining whether the program data would fit into a certain memory when stored according to a first policy for storing program data, and selecting a second policy for storing program data if the program data would not fit into the certain memory when stored according to the first policy, a certain field of information of at least part of the received program data being stored according the first policy, but not according to the second policy. An appropriate policy is selected based on the available (EPG) memory and (estimated) size of the program data. Omitting a certain field of information from a program listing is considered less annoying than omitting a whole channel or a whole day. Since the policy is selected before the program data is stored and the policy ensures that there is sufficient memory for the most important information, there is no need to remove previously available program data.

In an embodiment of the method, the at least part of the received program data describes programs belonging to a certain genre and/or programs being transmitted on a certain day.

The certain genre may include all genres except movies. For example, it may be desired to have extended description of movies, e.g. to enable a movie recommender, but this may not be necessary for all programs.

The certain field of information may comprise a description, an image, an audio segment and/or a video segment. The most interesting fields to omit are the fields that are relatively large.

The received program data may include a value for determining a size of at least part of the program data and determining whether the program data would fit into the certain memory comprises using the received value. To prevent the client device from having to analyze the size of the program data itself or basing its decisions only on averages only, a value received from a broadcaster can be used.

The value may comprise a variation in size of the at least a part of the program data with respect to a reference size.

Determining whether the program data would fit into the certain memory may comprise maintaining statistics and using the statistics to estimate the size of the program data when stored according to the first policy. This is advantageous when the broadcaster does not transmit any information about the size of the program data, but can also be advantageous in other cases. Since the broadcaster often does not know which technology is used to store the program data, e.g. which compression scheme is used, the size of the program data at the client device may be unknown.

The received program data may include a value for determining a size of at least part of the program data and determining whether the program data would fit into the certain memory may comprise maintaining statistics, using the statistics to estimate the size of the program data when stored according to the first policy, and correcting the estimated size with the received value.

According to the invention, the second object is realized in that the method of transmitting program data comprises the steps of determining a first value, the first value being useful for determining a first size of at least part of the program data when stored according to a first policy for storing program data, determining a second value, the second value being useful for determining a second size of at least part of the program data when stored according to a second policy for storing program data, but not useful for determining the first size, and a certain field of information of at least part of the received program data being stored according the first policy, but not according to the second policy, and transmitting the first value and the second value along with the program data. To avoid the need for a client device to maintain statistics about the average size of (certain) program data, which requires more processing, the broadcaster may transmit all information that is necessary to determine the size of the program data when stored according to the different policies.

According to the invention, the third object is realized in that the electronic circuitry of the device for receiving program data is operative to receive program data,
determine whether the program data would fit into a certain memory when stored according to a first policy for storing program data, and select a second policy for storing program data if the program data would not fit into the certain memory when stored according to the first policy, a certain field of information of at least part of the received program data being stored according the first policy, but not according to the second policy. The device may be a TV or a set top box (e.g. a DVD/HD recorder or a digital satellite/cable/terrestrial receiver), for example.

According to the invention, the fourth object is realized in that the electronic circuitry of the device for transmitting program information is operative to determine a first value, the first value being useful for determining a first size of at least part of the program data when stored according to a first policy for storing program data, determine a second value, the second value being useful for determining a second size of at least part of the program data when stored according to a second policy for storing program data, but not useful for determining the first size, and a certain field of information of at least part of the received program data being stored according the first policy, but not according to the second policy, and transmit the first value and the second value along with the program data.

### BRIEF DESCRIPTION OF THE DRAWINGS

These and other aspects of the invention are apparent from and will be further elucidated, by way of example, with reference to the drawings, in which:
Fig. 1 is a flow chart of the method of receiving program data of the invention;
Fig. 2 is a flow chart of the method of transmitting program data of the invention; and
Fig. 3 is a block diagram of the devices of the invention.

Corresponding elements in the drawings are denoted by the same reference numeral.

### DETAILED DESCRIPTION OF THE DRAWINGS

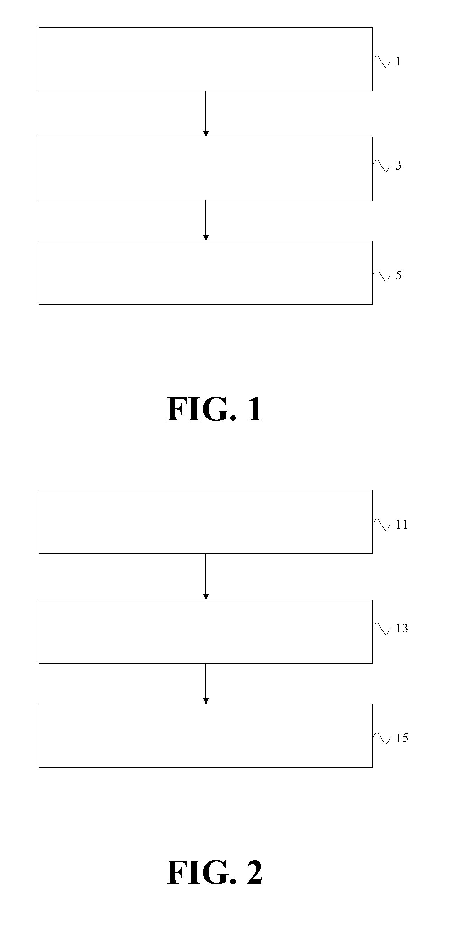

The method of receiving program data comprises three steps, see Fig. 1. A step 1 comprises receiving program data. A step 3 comprises determining whether the program data would fit into a certain memory when stored according to a first policy for storing program data. A step 5 comprises
selecting a second policy for storing program data if the program data would not fit into the certain memory when stored according to the first policy, a certain field of information of at least part of the received program data being stored according the first policy, but not according to the second policy.

The method of transmitting program data comprises three steps, see Fig. 2. A step 11 comprises determining a first value, the first value being useful for determining a first size of at least part of the program data when stored according to a first policy for storing program data. A step 13 comprises determining a second value, the second value being useful for determining a second size of at least part of the program data when stored according to a second policy for storing program data, but not useful for determining the first size, and a certain field of information of at least part of the received program data being stored according the first policy, but not according to the second policy. A step 15 comprises transmitting the first value and the second value along with the program data.

In an embodiment of the method, program data are available for 8 days and the following policies are defined:
Best Case Policy: Complete data for 8 days will be available.
   Policy A(Normal Field Expectation):
   First day: Complete data for all channels
   Remaining 7 days: All movies will have complete info. All other programs will have partial data (no long info).
Policy B (Worst case):
   First day: Complete data for all channels
   Next day: All movies will have complete info. All other programs will have partial data (no long info).
   Remaining 6 days: If memory is available, then all movies will have complete info. All other programs will have partial data (no long info).

In order to select one of the policies, the following information is collected:
1) (Average) memory used per channel per day with complete data
2) (Average) memory used per channel per day with partial data (no long info)
3) (Average) memory used by one movie with complete data
4) (Average) Number of movies for 7 days per channel

The average memory used and the average number of movies can be updated at the client, i.e. at the program data receiver. To improve the information, the broadcaster of program data can broadcast the data variation as a percentage from a reference point (e.g. from a particular year), which can be used to correct the average memory and the average number of movies with information about the currently broadcast program data. Alternatively, the broadcaster can transmit all required information itself, e.g. the memory used per channel per day with complete data for the currently broadcast program data. In the latter case, the client does not need to maintain statistics.

From the above information, the following thresholds are calculated before initiating the download of the program data:
1) Max Nr of channels up to which 8 day data can be supported as per policy A (N1)
2) Max Nr of channels up to which 2 day data can be supported as per policy B (N2)
3) Max Nr of days for which partial data can be supported as per policy B
4) Max Nr of days for which full data can be supported
5) Max Nr of channels that can be downloaded with full data (N3)

A policy is selected based on these thresholds and the following other information:
1) Program data memory
2) Number of Host Mapped channels (HMC)

The following rules define which policy is selected: If Host mapped channels are <= N3, then complete data will be downloaded for all the host mapped channels (Best case policy is followed).
If Host mapped channels are > N3, then the following rules will be followed.
If HMC < N1, Policy A will be followed
If HMC > N1 and < N2, Policy B will be followed
If HMC > N2, Policy B will be followed and all host mapped channels above N2 will be ignored

Hence in the worst case there will be one day of complete data and another day of partial data. Max number of channels will be reduced to the extent that the Policy B is always satisfied in any field condition. The channels that are ignored will be the ones that appear the last in the mapped channel list

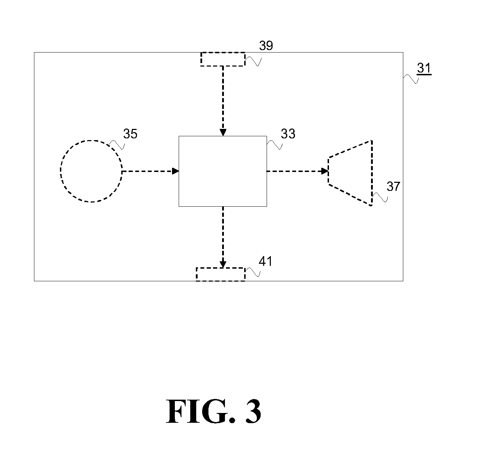

Fig. 3 shows the electronic device 31 of the invention. The electronic device 31 comprises electronic circuitry 33. At the client side, the electronic circuitry 33 is operative to receive program data, determine whether the program data would fit into a certain memory when stored according to a first policy for storing program data, and select a second policy for storing program data if the program data would not fit into the certain memory when stored according to the first policy, a certain field of information of at least part of the received program data being stored according the first policy, but not according to the second policy. At the broadcaster side, the electronic circuitry 33 is operative to determine a first value, the first value being useful for determining a first size of at least part of the program data when stored according to a first policy for storing program data, determine a second value, the second value being useful for determining a second size of at least part of the program data when stored according to a second policy for storing program data, but not useful for determining the first size, and a certain field of information of at least part of the received program data being stored according the first policy, but not according to the second policy, and transmit the first value and the second value along with the program data.

The electronic device 31 may further comprise a storage means 35, a reproduction means 37, an input 39 and/or an output 41. The electronic device 31 may be a stationary or a portable device. The electronic device 31 may be a consumer device, e.g. a TV or set top-box, or a professional device. The electronic circuitry 33 may be a general-purpose or an application-specific processor. The electronic circuitry 33 may be capable of executing a computer program. The program data may be DVB-SI data, for example. The program data may be transmitted using analog or digital broadcast or via the Internet, for example.

The storage means 35 may comprise, for example, a hard disk, solid-state memory, an optical disc reader or a holographic storage means. The reproduction means 37 may comprise, for example, a display and/or a loud speaker. The input 39 and output 41 may comprise, for example, a network connector, e.g. a USB connecter or an Ethernet connector, an analog audio and/or video connector, such as a cinch connector or a SCART connector, or a digital audio and/or video connector, such as an HDMI or SPDIF connector. The input 39 and output 41 may comprise a wireless receiver and/or transmitter. The input 39 may comprise a broadcast receiver.

While the invention has been described in connection with preferred embodiments, it will be understood that modifications thereof within the principles outlined above will be evident to those skilled in the art, and thus the invention is not limited to the preferred embodiments but is intended to encompass such modifications. The invention resides in each and every novel characteristic feature and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

'Means', as will be apparent to a person skilled in the art, are meant to include any hardware (such as separate or integrated circuits or electronic elements) or software (such as programs or parts of programs) which perform in operation or are designed to perform a specified function, be it solely or in conjunction with other functions, be it in isolation or in co-operation with other elements. The invention can be implemented by means of hardware comprising several distinct elements, and by means of a suitably programmed computer. In the apparatus claim enumerating several means, several of these means can be embodied by one and the same item of hardware. 'Computer program product' is to be understood to mean any software product stored on a computer-readable medium, such as a floppy disk, downloadable via a network, such as the Internet, or marketable in any other manner.

## Claims

1. A method of receiving program data, comprising the steps of:
- receiving (1) program data;
- determining (3) whether the program data would fit into a certain memory when stored according to a first policy for storing program data;
- selecting (5) a second policy for storing program data if the program data would not fit into the certain memory when stored according to the first policy, a certain field of information of at least part of the received program data being stored according the first policy, but not according to the second policy.

2. A method as claimed in claim 1, wherein the at least part of the received program data describes programs belonging to a certain genre and/or programs being transmitted on a certain day.

3. A method as claimed in claim 2, wherein the certain genre includes all genres except movies.

4. A method as claimed in claim 1, wherein the certain field of information comprises a description, an image, an audio segment and/or a video segment.

5. A method as claimed in claim 1, wherein the received program data includes a value for determining a size of at least part of the program data and determining whether the program data would fit into the certain memory comprises using the received value.

6. A method as claimed in claim 5, wherein the value comprises a variation in size of the at least a part of the program data with respect to a reference size.

7. A method as claimed in claim 1, wherein determining whether the program data would fit into the certain memory comprises maintaining statistics and using the statistics to estimate the size of the program data when stored according to the first policy.

8. A method as claimed in claim 1, wherein the received program data includes a value for determining a size of at least part of the program data and determining whether the program data would fit into the certain memory comprises maintaining statistics, using the statistics to estimate the size of the program data when stored according to the first policy, and correcting the estimated size with the received value.

9. A computer program product enabling a programmable device to perform the method of claim 1.

10. A method of transmitting program data, comprising the steps of:
- determining (11) a first value, the first value being useful for determining a first size of at least part of the program data when stored according to a first policy for storing program data;
- determining (13) a second value, the second value being useful for determining a second size of at least part of the program data when stored according to a second policy for storing program data, but not useful for determining the first size, and a certain field of information of at least part of the received program data being stored according the first policy, but not according to the second policy; and
- transmitting (15) the first value and the second value along with the program data.

11. A computer program product enabling a programmable device to perform the method of claim 10.

12. A device (31) for receiving program data, comprising electronic circuitry (33), the electronic circuitry (33) being operative to:
- receive program data;
- determine whether the program data would fit into a certain memory when stored according to a first policy for storing program data; and
- select a second policy for storing program data if the program data would not fit into the certain memory when stored according to the first policy, a certain field of information of at least part of the received program data being stored according the first policy, but not according to the second policy.

13. A device (31) for transmitting program information, comprising electronic circuitry (33), the electronic circuitry (33) being operative to:
- determine a first value, the first value being useful for determining a first size of at least part of the program data when stored according to a first policy for storing program data;
- determine a second value, the second value being useful for determining a second size of at least part of the program data when stored according to a second policy for storing program data, but not useful for determining the first size, and a certain field of information of at least part of the received program data being stored according the first policy, but not according to the second policy; and
- transmit the first value and the second value along with the program data.

14. A method of receiving program data, comprising the steps of:
- receiving program data;
- determining a size of at least a part of the program data;
- storing and retrieving an average size of the at least a part of the program data;
- selecting a part of the program data based on the average size of the at least a part of the program data; and
- storing the part of the program data in a memory.

15. A method as claimed in claim 1, wherein the received program data includes a variation in size of the at least a part of the program data with respect to a reference size and the part of the program data is selected based on the average size and the received variation in size of the at least a part of the program data.

16. A method of transmitting program data, comprising the steps of:
- determining a size of at least a part of the program data;
- determining a variation in size of the at least part of the program data with respect to a reference size; and
- transmitting the variation in size along with the program data.
